# FASCICULE DE BREVET EUROPEEN

(11) **EP 0 625 440 B1**
(45) Date de publication et mention de la délivrance du brevet: **01.07.1998**
(21) Numéro de dépôt: 94401072.7
(22) Date de dépôt: 11.05.1994
(51) Int. Cl.: B60G 9/00, B60G 11/27, B60G 11/113

(54) **Dispositif de fixation d'un essieu sur un bras de suspension et procédé de fixation d'un essieu sur un bras de suspension**
Vorrichtung und Verfahren zur Befestigung einer Achse auf einem Aufhängungslenker
Device and process for fixing an axle on a suspension arm

(30) Priorité: 17.05.1993 FR 9305929
(43) Date de publication de la demande: 23.11.1994
(73) Titulaire: SOCIETE EUROPEENNE DE SEMI-REMORQUES - SESR -, F-91035 Evry Cédex (FR)
(72) Inventeur: Pyman, David, Dereham, Norfolk NR19 1RX (GB)
(74) Mandataire: Michelet, Alain

(56) Documents cités:
- EP-A- 0 001 119
- DE-A- 2 635 329
- GB-A- 203 954
- GB-A- 2 010 758
- US-A- 2 559 103
- US-A- 3 144 246
- US-A- 3 386 724
- US-A- 3 630 541
- US-A- 3 773 347
- US-A- 3 814 410
- US-A- 4 566 719

## Description

L'invention concerne un dispositif de fixation d'un essieu sur un bras de suspension. L'invention concerne également un procédé de fixation d'un essieu sur un bras de suspension.

Les véhicules routiers à suspension pneumatique sont conçus de manière telle que chaque essieu est relié au châssis par deux bras de suspension. Chaque bras de suspension comporte deux extrémités dont l'une est montée pivotante au châssis alors que l'autre est montée sur une première extrémité d'un ressort pneumatique. La deuxième extrémité de ce ressort pneumatique est fixée sur le châssis.

Comme l'essieu est fixé sur le bras de suspension entre les deux extrémités de ce dernier, la différence entre les mouvements de chacun des bras de suspension d'un véhicule en marche engendre des efforts de torsion assez importants agissant sur l'essieu.

Jusqu'à maintenant, la fixation d'un essieu sur des bras de suspension est en général réalisée de la manière suivante: chaque bras de suspension est muni d'un berceau présentant deux joues qui se terminent chacune par une crête entre lesquelles est disposée l'essieu. Le berceau est solidarisé avec le bras de suspension, par exemple, par une bride d'assemblage, alors que l'essieu est fixé sur le berceau par des soudures effectuées le long des crêtes des joues du berceau.

Il a été constaté que les effets de torsion se concentrent principalement sur les extrémités des soudures. Les déchirures de la soudure qui en résultent peuvent se propager jusque dans l'essieu.

Le document GB-A-2.010.758 décrit un dispositif de fixation d'un essieu sur des ressorts à lames d'un véhicule et notamment du train arrière d'un camion. Ce dispositif comprend, d'une part, des projections soudées en épi sur des faces opposées d'un tube cylindrique formant un essieu et, d'autre part, pour chaque extrémité de l'essieu, un berceau interposé entre l'essieu et le ressort à lames et deux brides en forme d'un U destinées à enjamber le ressort à lames et à traverser le berceau, les projections soudées ainsi qu'une contre-bride disposée sur la face opposée, par rapport au berceau, de l'essieu.

Dans cette disposition, les contraintes de cisaillement générées par les effets de torsion agissant sur l'essieu, sont essentiellement transmises sur les brides en forme d'un U.

Un dispositif de fixation d'un essieu est également connu du document US-A-3.630.541. Ce dispositif de fixation est destiné à fixer l'essieu sur un bras de suspension et comprend, à cet effet, un berceau fixé sur le bras de suspension. Le berceau comporte deux joues entourant partiellement le tube cylindrique et qui sont terminées chacune par une crête. Le tube cylindrique comporte deux plaques fixées sur le tube et qui forment un relief par rapport à la surface externe du tube.

Cependant, les plaques sont disposées sur le tube cylindrique de façon à s'insérer entre le tube cylindrique et le berceau. Cette disposition permet d'éviter un mouvement rotatif du tube cylindrique par rapport au berceau, mais n'évite pas par ce moyen tout mouvement axial du tube par rapport au bras de suspension.

Le but de l'invention est de remédier aux inconvénients précités.

Plus particulièrement, le but de l'invention est de proposer un dispositif de fixation qui permette de fixer un essieu sur un bras de suspension d'une manière telle que toute concentration d'efforts soit évitée et qui permette, en même temps, d'assurer un positionnement sûr de l'essieu par rapport au bras de suspension.

Le but de l'invention est d'abord atteint par un dispositif de fixation d'un essieu sur un bras de suspension qui comprend un tube cylindrique ayant un axe et formant un essieu, et un berceau fixé sur le bras de suspension et destiné à recevoir le tube cylindrique. Le berceau comporte deux joues qui entourent partiellement le tube cylindrique et qui sont terminées chacune par une crête, le tube cylindrique comportant au moins une plaque fixée sur le tube de manière à former relief par rapport à la surface externe du tube.

Conformément à l'invention, le dispositif de fixation est caractérisé en ce que cette ces plaque(s) et les crêtes du berceau présentent chacune une face d'appui destinée à être en regard l'une de l'autre et ayant des formes en creux et en saillie de manière à former un profil conjugué, les faces d'appui de la plaque ou des plaques prenant appui sur les deux crêtes du berceau et coopérant l'une avec l'autre de façon à éviter tout mouvement axial et de rotation du tube cylindrique par rapport au berceau.

Cette conception a pour avantage d'éviter une fixation directe par soudure du berceau sur l'essieu et de dissocier la fonction de fixation proprement dite de la fonction de positionnement de l'essieu par rapport au berceau.

Cette disposition a également pour avantage que l'élément d'assemblage du tube comporte une face qui est apte à servir comme face d'appui de cet élément sur une face correspondante de la crête du berceau.

L'invention s'applique aussi bien à des essieux comprenant un tube cylindrique de révolution qu'à des essieux comprenant un tube cylindrique à section sensiblement carrée ou comprenant tout autre profilé creux à section sensiblement rectangulaire.

L'invention concerne également les caractéristiques ci-après, considérées séparément ou selon toutes leurs combinaisons techniquement possibles:
- La plaque constituant l'élément d'assemblage du tube présente au moins un évidement, le pourtour de cet évidement permettant de fixer la plaque sur le tube par une soudure le long du pourtour de l'évidement.
   Cette disposition a pour avantage que le cordon de soudure est sans fin et que les contraintes de torsion n'agissent pas seulement perpendiculairement à l'étendue du cordon de soudure. La forme et les dimensions de l'évidement, ou des évidements, peuvent être choisies en fonction des contraintes auxquelles l'essieu particulier doit résister.
- La plaque formant l'élément d'assemblage du tube est fixée sur le tube par vissage ou boulonnage. En dehors d'une fixation de la plaque par soudure ou par vissage ou boulonnage, d'autres modes de fixation, comme par exemple le collage et la fixation adhésive, sont concevables. Par ailleurs, il est également concevable que la plaque soit fixée par forgeage ou que le profil correspondant à celui d'une telle plaque soit obtenu, par forgeage, directement à partir du matériau du tube cylindrique. Cette alternative présenterait un tube, avec une ou plusieurs protubérances formant des plaques, en une seule pièce.
- Le tube cylindrique formant essieu comporte, pour chaque berceau, auquel il doit être relié, deux plaques destinées à coopérer chacune avec l'une des deux crêtes du berceau.
   Cette disposition correspond à un mode de réalisation préféré de l'invention.
   Il est également concevable que l'essieu ne soit muni, pour chaque berceau, que d'une seule plaque et que la plaque entoure le tube cylindrique partiellement de manière à prendre appui en même temps sur les deux crêtes du berceau.
- Les faces d'appui de l'élément d'assemblage du tube et de la crête correspondante du berceau s'étendent chacune sur deux niveaux et leur forme permet un emboîtement de l'élément d'assemblage et de la crête l'un dans l'autre.
   Dans la version la plus simple, le profil conjugué peut être obtenu en formant la plaque de façon que celle-ci présente sur sa face d'appui une saillie parallélépipédique et en formant la crête correspondante du berceau de façon que celle-ci présente une encoche ou un retrait parallélépipédique. De façon correspondante la saillie parallélépipédique peut être formée sur la crête du berceau alors que l'encoche parallélépipédique est formée dans la face d'appui de la plaque.
   Il est bien entendu que le profil conjugué peut être obtenu par une pluralité de saillies et de creux correspondants et que les creux et les saillies peuvent avoir des formes autres que parallélépipédiques.
   La forme de base de la plaque est celle d'un rectangle. Il est cependant concevable que toute autre forme symétrique ou asymétrique peut être choisie en fonction de la conception particulière de l'essieu et du bras de suspension. Plus particulièrement, la plaque peut être plane ou courbée, de façon à épouser la forme externe du tube cylindrique.
   De plus, les faces d'appui correspondantes de la plaque et de la crête du berceau peuvent être orientées, par rapport à l'axe du tube, soit radialement, soit en biseau. Et les différentes parties du profil conjugué peuvent être orientées à des angles de biseau différents.
   Ces différentes alternatives pour la forme et les dimensions du profil peuvent être complétées par des dispositions concernant les transitions entre les différentes parties du profil. Ainsi, il est concevable de former la saillie, ou les saillies, avec des bords arrondis ou angulaires et de former les transitions entre les différentes parties du profil de façon angulaire ou de façon arrondie.
- Une bride coopère avec une plaque de fixation sur laquelle elle est fixée par au moins un boulon pour maintenir le tube sur le berceau.

Il est bien entendu que l'ensemble formé par une bride, une plaque de fixation et un ou deux boulons peut être remplacé par un élément de boulonnage comme par exemple une bride, en forme d'un U dont les extrémités sont filetées, qui coopère avec une plaque de fixation et dont le serrage est effectué à l'aide d'écrous.

Le but de l'invention est également atteint par un procédé de fixation d'un essieu sur un bras de suspension. Ce procédé comprend essentiellement les étapes suivantes:
- mise en position de montage d'un tube cylindrique ayant un axe longitudinal et formant un essieu;
- mise en position de deux paires de plaques formant chacune un élément d'assemblage du tube, de façon que chacune des paires de plaques se trouve à proximité d'une extrémité correspondante du tube et de façon que chacune des deux paires de plaques soit située sensiblement diamétralement opposée par rapport à l'axe longitudinal du tube;
   les deux plaques de chacune des deux paires de plaques sont en outre orientées de façon que leurs faces d'appui soient constituées par le bord supérieur de la plaque (montage tête en bas);
- fixation des plaques sur le tube cylindrique;
- pose d'un berceau tenu de façon que les joues du berceau soient orientées vers le bas, sur le tube cylindrique de façon que les faces d'appui des joues prennent un appui sur les faces d'appui correspondantes des éléments d'assemblage du tube;
- mise en place de moyens d'assemblage destinés à entourer au moins partiellement l'essieu et le bras de suspension et actionnement de ces moyens pour fixer l'essieu sur le bras de suspension.

D'autres caractéristiques et avantages de l'invention ressortiront de la description d'un mode de réalisation en référence aux dessins. Dans ces dessins, les différentes figures montrent:
Figure 1: une vue en perspective d'un essieu monté sur deux bras de suspension au moyen de dispositifs selon l'invention.
Figure 2: en détail de la Figure 1, une partie de l'essieu monté sur un bras de suspension.
Figure 3: des coupes transversales de deux formes principales de réalisation d'un essieu et d'une variante de l'un de ces essieux, à savoir un tube cylindrique de révolution (a), une variante (b) de ce tube et un tube cylindrique de section sensiblement carrée (c), chacun de ces tubes étant muni de plaques d'assemblage selon l'invention.
Figure 4: une vue latérale d'une partie d'un essieu monté sur un bras de suspension.
Figure 5: (a) à (l): différentes formes de plaques d'assemblage.

Un essieu 1 est monté sur deux bras de suspension 2 et 3 au moyen de dispositifs de fixation.

Deux longerons 4 et 5 appartenant au châssis d'un véhicule routier constituent les supports nécessaires aux bras de suspension 2 et 3. Les bras de suspension 2 et 3 ont chacun deux extrémités, référencées respectivement en 6 et 7 pour le bras 2 et en 8 et 9 pour le bras 3.

Le bras de suspension 2 est monté pivotant à son extrémité 6 sur un élément de support 10, monté en épi sur le longeron 4. Par son extrémité 7, le bras de suspension 2 est relié au longeron 4 par l'intermédiaire d'un ressort pneumatique 12.

De manière semblable, le bras de suspension 3 est monté pivotant à son extrémité 8 sur un élément de support 11 monté en épi sur le longeron 5.

Par son extrémité 9, le bras de suspension 3 est relié au longeron 5 par l'intermédiaire d'un ressort pneumatique 13.

L'essieu l, qui a la forme d'un tube cylindrique de révolution, est positionné sur les bras de suspension 2 et 3 par deux berceaux 14 et 15. Chacun des berceaux 14 et 15 est fixé sur le bras de suspension correspondant au moyen de brides référencées respectivement en 16 et 17 et en 18 et 19 dont chacune a la forme d'un U.

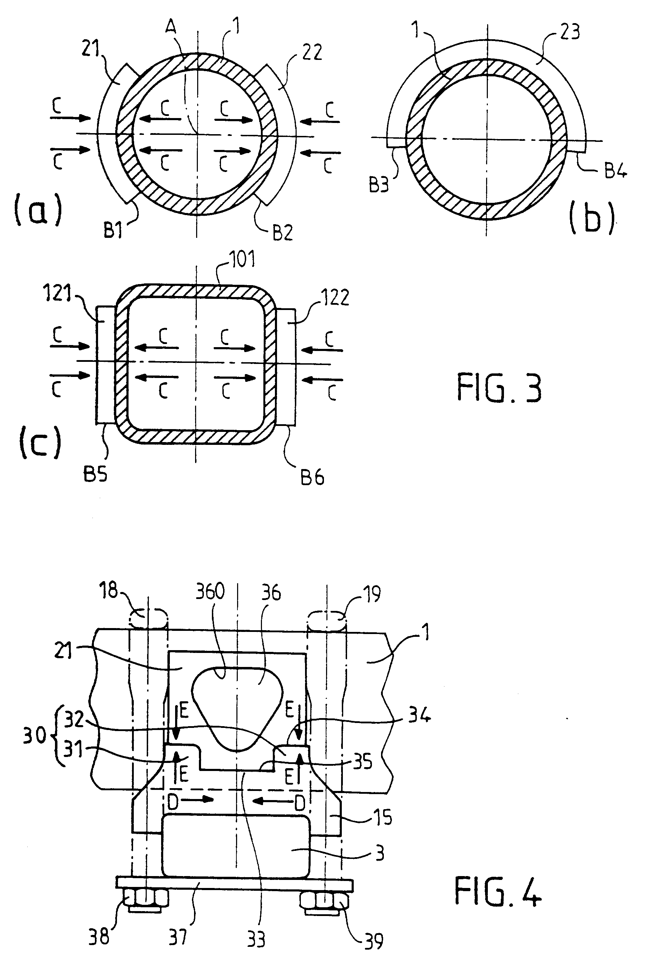

Deux plaques 20 et 21 constituant des éléments d'assemblage sont attachés solidairement à l'essieu l. Cette disposition sera décrite plus en détail en référence à la Figure 4.

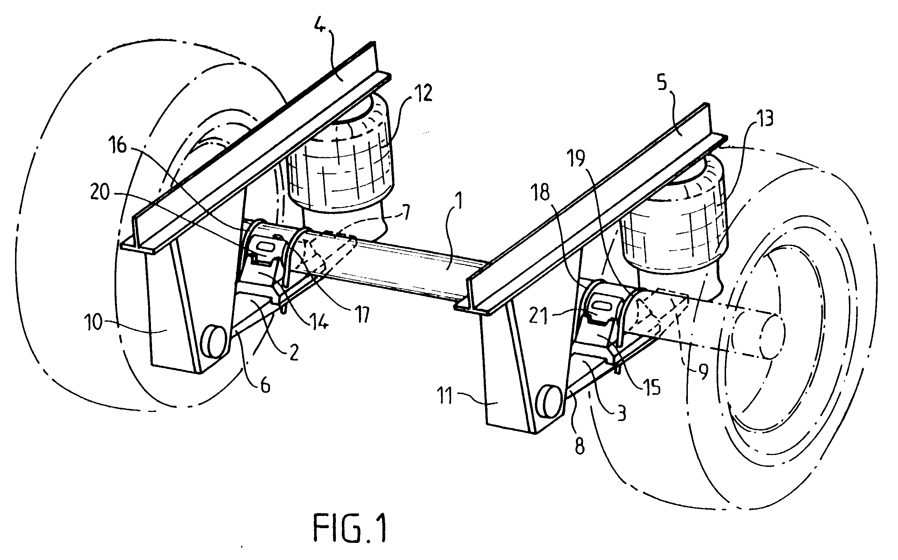

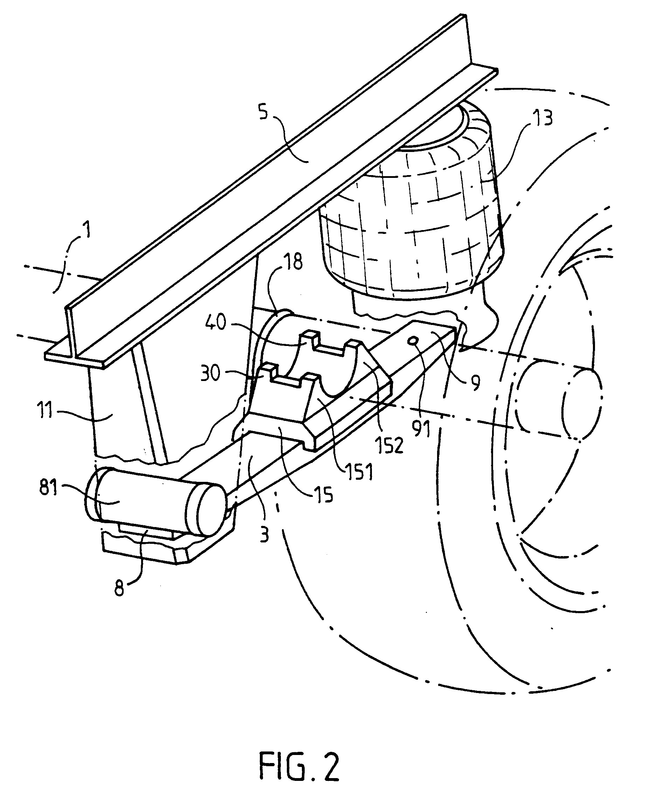

La Figure 2 montre, en détail de la Figure 1, l'essieu l tel qu'il est monté sur le bras de suspension 3. Pour des besoins de représentation, l'essieu l, l'élément de support ll et le ressort pneumatique 13 sont dessinés avec des arrachements et la bride 19 a été ôtée entièrement.

Un axe de pivotement 81 relie l'extrémité 8 du bras de suspension 3 à l'élément de support ll. Un orifice 91 usiné dans l'extrémité 9 du bras de suspension 3 est destiné à recevoir un axe (non représenté) reliant l'extrémité 9 au ressort pneumatique 13.

Le berceau 15 comporte deux joues 151 et 152 qui entourent partiellement l'essieu l et qui sont terminées chacune par une crête 30 ou 40. Les crêtes 30 et 40 présentent des faces d'appui dont la forme et la fonction seront décrites plus en détail et ensemble avec la plaque de support 21, en référence à la Figure 4.

L'essieu l comporte deux éléments d'assemblage 21 et 22 fixés solidairement et diamétralement opposés par rapport à un axe longitudinal A du tube l. Ces éléments sont de forme générale courbée afin de pouvoir épouser l'enveloppe du tube cylindrique.

En variante, représentée sur la Figure 3(b), l'essieu l est muni d'une seule plaque. Mais cette plaque 23 entoure l'essieu sensiblement sur la moitié de son pourtour. La plaque 23 prend alors appui sur les deux crêtes du berceau.

L'essieu peut être formé par un tube à section sensiblement carrée 101.

Ce tube 101 est muni de deux plaques de forme générale plate formant des éléments d'assemblage 121 et 122.

Les plaques 21, 22, 23, 121 et 122 présentent chacune une face inférieure référencée en B1, B2, B3, B4, B5 et B6 qui est destinée à prendre appui sur le berceau 14 ou 15, comme il sera expliqué plus en détail en référence à la Figure 4.

En plus de leur fonction d'éléments d'assemblage, les plaques 21, 22, 23, 121 et 122 remplissent leur rôle d'un renforcement des parties correspondantes avant et arrière (considéré par rapport au sens de la marche du véhicule) du tube cylindrique 1 ou du tube 101. Il en résulte une réduction de mouvements de l'essieu dans les directions indiquées par des flèches C, lorsque le véhicule est en marche.

Par ailleurs, la disposition des plaques permet une réduction de la section du tube et, par conséquent, une réduction du matériau nécessaire pour fabriquer le tube et donc également une réduction de son poids.

La Figure 4 montre l'essieu l et les éléments de fixation nécessaires à la fixation de l'essieu l sur le bras de suspension 3.

L'essieu 1 est muni d'une plaque 21 constituant un des éléments d'assemblage solidaire du tube. Le berceau 15 est disposé sur le bras de suspension 9 et reçoit en même temps l'essieu l.

Dans sa partie supérieure, le berceau 15 présente une crête 30 qui s'étend en deux parties 31 et 32, sur la majeure partie de la largeur du berceau 15. Entre les deux parties 31 et 32 est formée une encoche parallélépipédique 33.

La plaque 21 présente dans sa partie inférieure une face d'appui 34 qui s'étend sur la largeur entière de la plaque 21.

Le bord inférieur de la plaque 21 présente une saillie sensiblement parallélépipédique 35 ayant une forme complémentaire par rapport à l'encoche parallélépipédique 33 du berceau 15.

La crête 30 du berceau 15 et la plaque 21 forment des éléments d'assemblage emboîtables l'un dans l'autre. Pour cela, leurs faces d'appui présentent des formes en creux et en saillie de manière à former un profil conjugué simple. Cette disposition permet d'une part un positionnement précis de l'essieu l par rapport au berceau 15. Par ailleurs, cette disposition permet d'éviter des mouvements axiaux (flèche D) et verticaux (flèche E) par rapport au berceau 15.

La plaque 21 comporte un évidement 36 ayant un pourtour 360. L'évidement 36 permet la fixation de la plaque sur l'essieu l au moyen d'une soudure effectuée le long du pourtour 360.

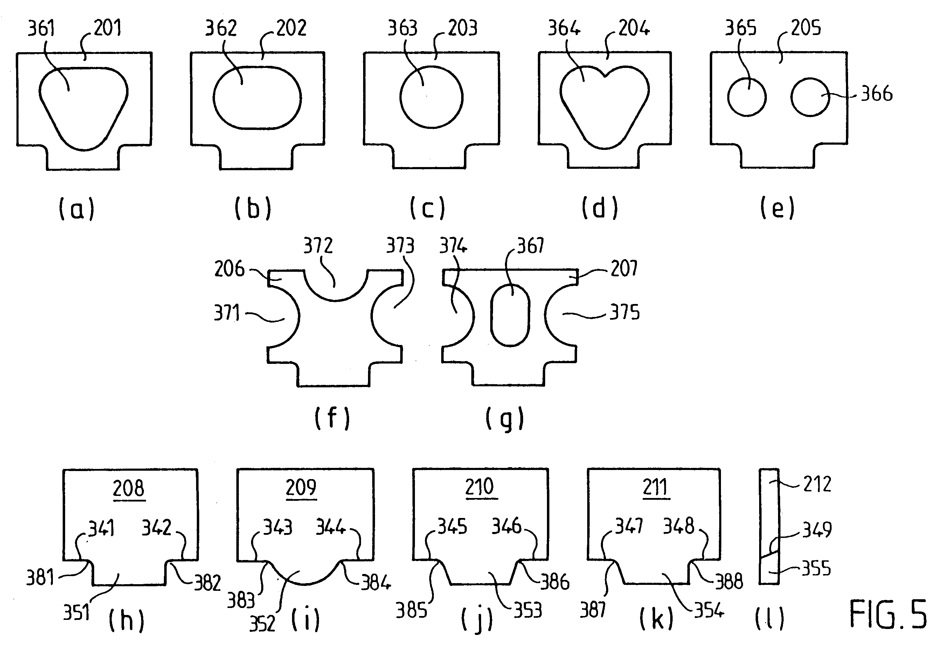

La forme de l'évidement 36 et du profil de la face d'appui 34 sont décrites plus en détail en référence à la Figure 5.

Pour réaliser la fixation et le serrage de l'essieu 1 sur le bras de suspension 3, le dispositif de fixation comprend également deux éléments de boulonnage 18 et 19. Chacun de ces éléments 18 et 19 est constitué par une bride ayant la forme générale d'un U. Les brides 18 et 19 sont placées chacune à cheval sur l'essieu l et traversent d'abord le berceau 15 et ensuite une plaque de fixation 37 disposée du côté opposé du bras de suspension 3 par rapport au berceau 15.
Les brides 18 et 19 ont des extrémités filetées et dépassent la plaque de fixation 37 suffisamment loin pour permettre la mise en place d'éléments de montage connus de l'homme du métier et dont la Figure 4 ne montre que deux écrous 38 et 39.

La Figure 5 montre des exemples de réalisation de plaques de support correspondant, par exemple, à la plaque de support 21. Ces exemples, référencés en 201 à 212, font abstraction de la caractéristique d'une plaque courbée, comme la plaque 21, ou d'une plaque plane. Ils montrent chacun des caractéristiques qui peuvent être combinées selon les besoins techniques pour obtenir le dispositif de fixation souhaité.

Plus particulièrement, les plaques 201 à 205 comportent cinq variantes de l'évidement 36, référencées respectivement en 361 jusqu'à 366, alors que les plaques 206 et 207 sont formées de façon à être fixées sur l'essieu au moyen d'un boulonnage.

Les plaques 208 à 211 comportent des formes différentes de la saillie 35 et des transitions entre ces saillies et les portions avoisinantes de la face d'appui 34.

La plaque 212 comporte une face d'appui orientée partiellement en biseau par rapport à la direction d'appui prévue par cette plaque.

De manière générale, les plaques de support sont fixées sur le tube formant essieu par soudure. Pour cela, les plaques 201 à 205 comportent chacune un ou deux évidements. Lors de la fixation de la plaque sur l'essieu, le cordon de soudure est posé le long du pourtour de ces évidements. Ainsi, le cordon de soudure se présente sous une forme infinie, c'est-à-dire le cordon de soudure n'a pas d'extrémité (début et fin du cordon de soudure) et ne présente donc plus de points exposés au risque d'un départ de déchirure du cordon de soudure.

Parmi les formes le plus souvent utilisées de l'évidement, on trouve l'évidement 361 qui a la forme générale d'un triangle à angles arrondis, l'évidement 362 de forme générale d'un trou oblong qui, en variante de cela, peut également être constitué par un évidement elliptique, et l'évidement 363 de forme générale circulaire.

En variante de ces trois formes de l'évidement, la plaque peut également être muni d'un évidement 364 de forme générale d'un coeur ou de deux évidements circulaires 365 et 366, comme les plaques 204 et 205 en constituent respectivement des exemples.

Il est cependant concevable que la plaque de support soit fixée au moyen d'un boulonnage qui remplace la fixation par soudure ou qui s'y rajoute.

Pour cela, la plaque 206 comporte sur les trois côtés qui ne constituent pas la face d'appui, des creux 371, 372 et 373. Ces creux permettent de positionner et de fixer la plaque 206 sur le tube formant l'essieu, par exemple par trois boulons qui s'engagent dans ces creux, ou par deux boulons censés s'engager dans les creux 371 et 373 et un pignon solidaire de l'essieu et destiné à être engagé dans le creux 372.

La plaque 207 offre la possibilité d'une combinaison de moyens de fixation de la plaque sur l'essieu. La plaque 207 est munie d'un évidement 367 et de deux creux 374 et 375 correspondant aux creux 371 et 373 de la plaque 206. Ainsi, la plaque 207 peut être soudée sur l'essieu le long du pourtour de l'évidement 367, par exemple au moyen d'un cordon de soudure fin, et fixée en plus par deux boulons s'engageant dans les creux 374 et 375.

En variante de cette fixation combinée par boulons et pignon ou par boulons et soudure, les plaques 206 et 207 peuvent être fixées sur le tube formant l'essieu par soudure seulement. Dans ce cas, des cordons de soudure sont posés le long des bordures des creux 371, 372, 373 et 374, 375 et le long du pourtour de l'évidement 367.

Il est bien entendu que toutes les plaques constituant l'élément d'assemblage du tube peuvent également être fixées sur le tube formant l'essieu, soit par un cordon de soudure posé le long de la bordure de la saillie et des portions avoisinantes, soit par un cordon de soudure posé tout le long du pourtour de la plaque.

Les plaques de support 208 à 211 sont représentées sur les Figures 5(h) à 5(k) en faisant abstraction de tout évidement et creux. Ces plaques sont représentées de façon à montrer uniquement des exemples de forme de saillie et des transitions entre ces saillies et les portions avoisinantes de la plaque. Les saillies sont référencées en 351 à 354, les portions avoisinantes sont référencées en 341 à 348 et les angles de transition sont référencés en 381 à 388.

La Figure 5(h) montre une plaque 208 dont la saillie 351 a la forme générale d'un parallélépipède. La transition entre la saillie 351 et les parties avoisinantes 341 et 342 de la plaque est réalisée sous forme d'angles arrondis 381 et 382.

La Figure 5(i) montre une plaque 209 munie d'une saillie 352 de forme générale d'un segment de cylindre. La saillie peut, cependant, avoir toute forme ronde symétrique ou asymétrique. Les angles de transition entre la saillie 352 et les portions avoisinantes 343 et 344 sont réalisés sous forme d'angles obtus 383 et 384. Ces angles ne sont pas arrondis.

La Figure 5(j) montre une plaque 210 dont la saillie 353 a la forme générale d'un trapézoïde. La transition entre la saillie 353 et les portions avoisinantes 345 et 346 est réalisée sous forme d'angles obtus arrondis 385 et 386.

La Figure 5(k) montre une plaque 211 dont la saillie 354 est asymétrique. La saillie 354 est trapézoïde d'un côté. Elle forme avec la portion avoisinante 347 une transition 387 à angle obtus non arrondi.

De l'autre côté, la saillie 354 a une forme générale parallélépipédique et forme avec la portion avoisinante 348 une transition 388 à angle droit arrondi.

La plaque 212 est représentée sur la Figure 5(l) en une vue latérale. La plaque 212 comporte une saillie 355, une première portion avoisinante 349 et une deuxième portion avoisinante non représentée. La face d'appui de la portion 349 est orientée en biseau par rapport à l'étendue verticale de la plaque, alors que la face d'appui est perpendiculaire à cette étendue dans la portion constituée par la saillie 355.

Il est bien entendu que les différentes portions de la face d'appui d'une plaque, qu'il s'agisse de la face d'appui de la saillie ou des faces d'appui des portions avoisinantes, peuvent avoir des orientations indépendantes l'une de l'autre. Ainsi, la face d'appui de la portion avoisinante 349 de la plaque 212 peut avoir la même inclinaison que la face d'appui de la portion avoisinante non représentée de cette plaque. Les faces d'appui de ces deux portions avoisinantes peuvent, cependant, avoir aussi des inclinaisons opposées. De plus, la saillie 355 peut être, à l'encontre de la représentation sur la Figure 5(l) être également orientée en biseau.

En variante de ces dispositions, il est concevable que la face d'appui de la saillie soit orientée en biseau alors que les faces d'appui des portions avoisinantes soient orientées perpendiculairement à l'étendue verticale de la plaque.

Par ailleurs, toutes les dispositions décrites pour les plaques 201 à 212, que ce soit quant à la forme de l'évidement ou des creux ou quant à la forme des saillies et des faces d'appui s'appliquent de façon correspondante aussi bien à des plaques courbées qu'à des plaques planes.

De même, ces différentes dispositions s'appliquent de façon correspondante dans le cas où les plaques comportent, à la place de saillie, un creux destiné à coopérer avec une saillie correspondante formée dans la crête d'une joue du berceau.

Les signes de référence insérés après les caractéristiques techniques mentionnées dans les revendications, ont pour seul but de faciliter la compréhension de ces dernières, et n'en limitent aucunement la portée.

## Revendications

1. Dispositif de fixation d'un essieu sur un bras de suspension comprenant un tube cylindrique (1) ayant un axe (A) et formant un essieu, et un berceau (15) fixé sur le bras de suspension (3) et destiné à recevoir le tube cylindrique (1), ledit berceau (15) comportant deux joues (151, 152) entourant partiellement le tube cylindrique (1) et terminées chacune par une crête (30, 40), le tube cylindrique (1) comportant au moins une plaque (21, 22; 23) fixée sur le tube (1) et formant relief par rapport à la surface externe du tube (1), caractérisée en ce que la plaque (23) ou les plaques (21, 22) présentent deux faces d'appui et les crêtes (30, 40) du berceau (15) présentent chacune une face d'appui, les faces d'appui de la plaque (23) ou des plaques (21, 22) et les faces d'appui des crêtes (30, 40) étant disposées de façon à être en regard les unes des autres, et ayant des formes, en vue transversale par rapport à l'axe (A) du tube (1), en creux et en saillie de manière à former un profil conjugué, les faces d'appui de la plaque ou des plaques prenant appui sur les deux crêtes du berceau et coopérant l'un avec l'autre de façon à éviter tout mouvement axial et de rotation du tube cylindrique (1) par rapport au berceau.

2. Dispositif de fixation selon la revendication 1, caractérisé en ce que chacune des plaques (21) constituant l'élément d'assemblage du tube (1) présente au moins un évidement (36), le pourtour de cet évidement (36) permettant de fixer la plaque (21) sur le tube (1) par une soudure le long du pourtour de l'évidement (36).

3. Dispositif de fixation selon la revendication 1, caractérisé en ce que chacune des plaques (206, 207) formant l'élément d'assemblage du tube (1) est fixée sur le tube (1) par vissage ou boulonnage.

4. Dispositif de fixation selon l'une quelconque des revendications 1 à 3, caractérisé en ce que les faces d'appui de l'élément d'assemblage (21) du tube (1) et de la crête correspondante (30) du berceau (15) s'étendent chacune sur deux niveaux et que leur forme permet un emboîtement de l'élément d'assemblage (21) et de la crête (30) l'un dans l'autre.

5. Dispositif de fixation selon l'une quelconque des revendications 1 à 4, caractérisé en ce que les faces d'appui (33, 34) des plaques (21) et de la crête (30) du berceau (15) sont orientées en biseau.

6. Dispositif de fixation selon l'une quelconque des revendications 1 à 5, caractérisé en ce qu'il comprend une bride (18, 19) destinée à coopérer avec une plaque de fixation (37) sur laquelle elle est fixée par au moins un boulon (38, 39) pour maintenir le tube cylindrique (1) sur le berceau (15).

7. Procédé de fixation d'un essieu sur un bras de fixation, caractérisé en ce qu'il comprend les étapes suivantes:
- mise en position de montage d'un tube cylindrique ayant un axe longitudinal et formant un essieu;
- mise en position de deux paires de plaques formant chacune un élément d' assemblage du tube, de façon que chacune des paires de plaques se trouve à proximité d'une extrémité correspondante et de façon que chacune des deux paires de plaques soit située sensiblement diamétralement opposée et symétrique par rapport à l'axe longitudinal du tube;
- fixation des plaques sur le tube cylindrique;
- pose d'un berceau, tenu de façon que les joues du berceau soient orientées vers le bas, sur le tube cylindrique de façon que les faces d'appui des joues prennent appui sur les faces d'appui correspondantes des éléments d'assemblage du tube;
- mise en place de moyens d'assemblage destinés à entourer au moins partiellement l'essieu et le bras de suspension et actionnement de ces moyens pour fixer l'essieu sur le bras de suspension.

## Claims

1. Device for fastening an axle to a suspension arm comprising a cylindrical tube (1) having an axis (A) and forming an axle, and a support bracket (15) fastened to the suspension arm (3) and intended to receive the cylindrical tube (1), the said support bracket (15) including two cheeks (151,152) partially surrounding the cylindrical tube (1) and each ending in a ridge (30,40), the cylindrical tube (1) including at least one plate (21,22,23) fastened to the tube (1) and forming a relief with respect to the external surface of the tube (1), characterized in that the plate (23) or the plates (21,22) have two bearing faces and the ridges (30,40) of the support bracket (15) each have a bearing face, the bearing faces of the plate (23) or the plates (21,22) and the bearing faces of the ridges (30,40) being facing each other and having hollow and projecting shapes, as seen in a transverse direction with respect to the axis (A) of the tube (1), so as to form a matched profile, the bearing faces of the plate or the plates coming to bear on the ridges of the support bracket, and interacting with each other so as to prevent any axial and rotational movement of the cylindrical tube (1) with respect to the support bracket.

2. Fastening device according to claim 1, characterized in that each one of the plates (21) forming the assembly element of the tube (1) has at least one recess (36), the perimeter of this recess (36) making it possible to fasten the plate (21) to the tube (1) by a weld along the perimeter of the recess (36).

3. Fastening device according to claim 1, characterized in that each one of the plates (206,207) forming the assembly element of the tube (1) is fastened to the tube (1) by screwing or bolting.

4. Fastening device according to any one of claims 1 to 3, characterized in that the bearing faces of the assembly element (21) of the tube (1) and of the corresponding ridge (30) of the support bracket (15) each extend over two levels and in that their shape allows the assembly element (21) and the ridge (30) to be fitted together.

5. Fastening device according to any one of claims 1 to 4, characterized in that the bearing faces (33,34) of the plate (21) and of the ridge (30) of the support bracket (15) are bevelled.

6. Fastening device according to any one of claims 1 to 5, characterized in that it comprises a clamp (18,19) intended to interact with a fastening plate (37) to which it is fastened by at least one bolt (38,39) in order to hold the cylindrical tube (1) on the support bracket (15).

7. Method of fastening an axle to a fastening arm, characterized in that it comprises the following steps :
- placing in the fitting position a cylindrical tube which has a longitudinal axis and forms an axle;
- placing in position two pairs of plates each forming an assembly element of the tube, so that each of the pairs of plates is located close to a corresponding end of the tube and so that each of the two pairs of plates is situated substantially diametrically opposite and symmetrically with respect to the longitudinal axis of the tube;
- fastening the plates to the cylindrical tube;
- placing a support bracket, held so that the cheeks of the support bracket points downwards, onto the cylindrical tube so that the bearing faces of the cheeks bear on the corresponding bearing faces of the assembly elements of the tube;
- putting in place assembly means which are intended at least partially to surround the axle and the suspension arm and acting upon these means in order to fasten the axle to the suspension arm.

## Patentansprüche

1. Befestigungsvorrichtung für eine Radachse auf einem Aufhängungsarm mit einem zylindrischen Rohr (1), das eine Achse (A) hat und eine Rodachse bildet, und einem Schlitten (15), der auf dem Aufhängungsarm (3) befestigt und dazu bestimmt ist, das zylindrische Rohr (1) aufzunehmen, wobei der Schiffen (15) zwei Seitenwände (151, 152) hat, die das zylindrische Rohr (1) teilweise umgeben und jeweils in einer Spitze (30, 40) enden, wobei das zylindrische Rohr (1) wenigstens eine Platte (21, 22; 23) aufweist, die auf dem Rohr (1) befestigt ist und bzgl. der äußeren Oberfläche des Rohrs (1) eine Erhebung bildet,
**dadurch gekennzeichnet, daß**
die Platte (23) bzw. die Platten (21, 22) zwei Stützflächen und die Spitzen (30, 40) des Schlittens (15) jeweils eine Stützfläche haben, wobei die Stützflächen der Platte (23) bzw. der Platten (21, 22) und die Stützflächen der Spitzen (30, 40) einander gegenüberliegend angeordnet sind und in Querrichtung bzgl. der Achse (A) des Rohrs (1) gesehen derart vertiefte und vorspringende Formen haben, daß ein konjugiertes Profil gebildet wird, wobei sich die Auflageflächen der Platte bzw. der Platten an den beiden Spitzen des Schlittens abstützen und derart miteinander zusammenwirken, daß jede axiale Bewegung und Drehbewegung des zylindirschen Rohrs (1) bzgl. des Schlittens vermieden wird.

2. Befestigungsvorrichtung noch Anspruch 1,
**dadurch gekennzeichnet, daß**
jede der Platten (21) ein Verbindungselement des Rohrs (1) bildet und wenigstens eine Aussparung (36) aufweist, wobei der Umfang dieser Aussparung (36) die Befestigung der Platte (21) am Rohr (1) durch eine Schweißverbindung längs des Umfangs der Aussparung (36) ermöglicht.

3. Befestigungsvorrichtung nach Anspruch 1,
**dadurch gekennzeichnet, daß**
jede der Platten (206, 207), die das Verbindungselement des Rohrs (1) bilden, am Rohr (1) durch eine Schraub- oder Bolzenverbindung befestigt ist.

4. Befestigungsvorrichtung nach einem der Ansprüche 1 - 3
**dadurch gekennzeichnet, daß**
die Stützflächen des Verbindungselements (21) des Rohrs (1) und der entsprechenden Spitze (30) des Schlittens (15) jede auf zwei Hohen verlaufen, und daß ihre Form ein Einpassen des Verbindungselements (21) und der Spitze (30) ineinander ermöglicht.

5. Befestigungsvorrichtung nach einem der Ansprüche 1 - 4,
**dadurch gekennzeichnet, daß**
die Stützflächen (33, 34) der Platten (21) und der Spitze (30) des Schlittens (15) schräg ausgerichtet sind.

6. Befestigungsvorrichtung nach einem der Ansprüche 1 - 5,
dadurch genkennzeichnet, daß sie einen Flansch (18,19) aufweist, der mit einer Befestigungsplatte (37) zusammenwirkt, auf der er mittels wenigstens eines Bolzens (38,39) befestigt ist, um das zylindrische Rohr (1) auf dem Schlitten (15) zu halten.

7. Verfahren zum Befestigen einer Radachse an einem Aufhängungsarm,
**dadurch gekennzeichnet, daß**
es die folgenden Schritte aufweist:
- das in Montagepositionbringen eines zylindrischen Rohrs, das eine Längsachse hat und eine Radachse bildet,
- das in Positionbringen von zwei Plattenpaaren, das jeweils ein Verbindungselement des Rohrs darart bildet, daß sich jedes Plattenpaar nahe einem entsprechenden Ende befindet, und derart, daß jedes der beiden Plattenpaare im wesentlichen diametral entgegengesetzt und symmetrisch bzgl. der Längsachse des Rohrs angeordnet ist;
- das Befestigen der Platten am zylindrischen Rohr;
- das Anbringen eines Schlittens, der derart gehalten wird, daß die Seitenwände des Schlittens nach unten auf das zylindrische Rohr ausgerichtet sind, so daß sich die Stützflächen der Seitenwände auf den entsprechenden Stützflächen der Verbindungselemente des Rohrs abstützen;
- das Anbringen der Verbindungsmittel, die dazu bestimmt sind, wenigstens teilweise die Radachse und den Aufhängungsarm zu umgeben, und die Betätigung dieser Mittel, um die Radachse auf dem Aufhängungsarm zu befestigen.
